# EUROPÄISCHE PATENTANMELDUNG

(11) **EP 1 470 850 A2**
(43) Veröffentlichungstag der Anmeldung: **27.10.2004**
(21) Anmeldenummer: 04450091.6
(22) Anmeldetag: 21.04.2004
(51) Int. Cl.: B01D 45/08, B01D 45/14

(54) **Vorrichtung zum Abscheiden eines Flüssigkeitsnebels aus einer Abluft**

(30) Priorität: 25.04.2003 AT 6312003
(71) Anmelder: Lechner, Josef, Ing., 5500 Bischofshofen (AT); Temmel, Reinhart, Dipl.-Ing, 5440 Kuchl (AT)
(72) Erfinder: Lechner, Josef, Ing., 5500 Bischofshofen (AT); Temmel, Reinhart, Dipl.-Ing, 5440 Kuchl (AT)
(74) Vertreter: Hübscher, Helmut, Dipl.-Ing.

(57) **Zusammenfassung**

Es wird eine Vorrichtung zum Abscheiden eines Flüssigkeitsnebels aus einer Abluft mit einem eine vertikale Drehachse aufweisenden Radialgebläse (4) und mit einem das Radialgebläse (4) aufnehmenden, einen Sammelraum für die abgeschiedene Flüssigkeit bildenden Gehäuse (1) beschrieben, das neben einem Abluftauslaß (12) einen zum Radialgebläse (4) koaxialen Ansaugstutzen (6) im Boden (2) aufweist. Um eine vorteilhafte Abscheidewirkung innerhalb der Abscheidewand (7) zu ermöglichen, wird vorgeschlagen, daß im Gehäuse (1) eine das Radialgebläse (4) und den Ansaugstutzen (6) mit radialem Abstand umschließende, den Boden (2) und die Decke (3) des Gehäuses (1) verbindende Abscheidewand (7) vorgesehen ist, die aus wenigstens zwei Reihen von einander reihenweise überlappenden Lamellen (8, 9) besteht, und daß der Abluftauslaß (12) außerhalb der Abscheidewand (7) angeordnet ist.

## Beschreibung

Die Erfindung bezieht sich auf eine Vorrichtung zum Abscheiden eines Flüssigkeitsnebels aus einer Abluft mit einem eine vertikale Drehachse aufweisenden Radialgebläse und mit einem das Radialgebläse aufnehmenden, einen Sammelraum für die abgeschiedene Flüssigkeit bildenden Gehäuse, das neben einem Abluftauslaß einen zum Radialgebläse koaxialen Ansaugstutzen im Boden aufweist.

Zum Abscheiden eines Ölnebels aus einer Abluft ist es bekannt (DE 37 02 765 C2), ein Radialgebläse mit vertikaler Drehachse in ein zylindrisches Gehäuse einzusetzen, dessen Boden eine zum Radialgebläse koaxiale Einlaßdüse und dessen Decke einen zur Einlaßdüse koaxialen Abluftstutzen tragen. Der Rotor des Radialgebläses weist einen zylindrischen Filtermantel auf, durch den die über die Einlaßdüse angesaugte Abluft fliehkraftbedingt strömt, wobei die sich im Filtermantel abscheidenden Nebeltröpfchen zu größeren Tröpfchen vereinigen, die aufgrund der wirksamen Fliehkräfte durch den Filtermantel hindurchgedrückt und gegen die Umfangswand des Gehäuses geschleudert werden, wo sie mit Hilfe von axialen Fangleisten gegen den Gehäuseboden abgeleitet werden, während die Abluft über den Abluftstutzen aus dem Gehäuse geblasen wird. Trotz einer der Gehäusedecke zugehörigen, ringförmigen Leiteinrichtung, die ein unmittelbares Ausströmen der Abluft entlang der Umfangswand und der Decke des Gehäuses verhindert, kann durch diese bekannte Vorrichtung das Mitreißen von kleinen Nebeltröpfchen auf der Druckseite des Radialgebläses nicht verhindert werden. Dazu kommt, daß die Gefahr einer Verlegung des Filtermantels besteht, insbesondere wenn einer Verlegung des Filtermantels besteht, insbesondere wenn mit einer Staubbelastung der Abluft gerechnet werden muß.

Der Erfindung liegt somit die Aufgabe zugrunde, eine Vorrichtung zum Abscheiden eines Flüssigkeitsnebels aus einer Abluft der eingangs geschilderten Art so auszugestalten, daß nicht nur eine gute Abscheidewirkung gewährleistet, sondern auch eine hohe Betriebssicherheit mit einfachen konstruktiven Maßnahmen erreicht werden kann.

Die Erfindung löst die gestellte Aufgabe dadurch, daß im Gehäuse eine das Radialgebläse und den Ansaugstutzen mit radialem Abstand umschließende, den Boden und die Decke des Gehäuses verbindende Abscheidewand vorgesehen ist, die aus wenigstens zwei Reihen von einander reihenweise überlappenden Lamellen besteht, und daß der Abluftauslaß außerhalb der Abscheidewand angeordnet ist.

Da zufolge dieser Maßnahmen das Radialgebläse von einer sich zwischen Boden und Decke des Gehäuses erstreckenden, ruhenden Abscheidewand umschlossen wird, die aus einander überlappenden Lamellen besteht, werden die mit der Abluft angesaugten Nebeltröpfchen durch das Radialgebläse nach Art einer Zentrifuge radial nach außen gegen die Abscheidewand geschleudert, auf der sich die Nebeltröpfchen anlagern, um entlang der Lamellen gegen den Gehäuseboden abzufließen. Die durch die gegenseitige Überlappung der Lamellen bedingte Umlenkung der Abluftströmung stellt eine gute Abscheidewirkung sicher, und zwar ohne Verlegungsgefahr für die Spalte zwischen den einander überlappenden Lamellen, die ja mit ausreichendem Abstand voneinander angeordnet werden können. Die Strömungsumlenkung durch die Lamellen bedingt im Zusammenwirken mit der sich entlang der Lamellen ergebenden Strömungskomponente eine rasche Abnahme der Strömungsgeschwindigkeit von der Innen- auf die Außenseite der Abscheidewand, so daß keine Nebeltröpfchen mit dem Abluftstrom durch die Abscheidewand mitgerissen werden. Im Gegensatz zu bekannten umlaufenden Abscheidewänden tritt ja außerhalb der Abscheidewand nach der Erfindung keine Fliehkraftwirkung mehr auf die abgeschiedenen Nebeltröpfchen auf. Die vom Flüssigkeitsnebel gereinigte Abluft kann somit außerhalb der Abscheidewand aus dem Gehäuse über einen entsprechenden Abluftauslaß ohne Gefahr einer Wiederaufnahme von bereits abgeschiedenen Nebeltröpfchen austreten. Der Abluftauslaß kann durch die gelochte Umfangswand des Gehäuses, aber auch durch einen stirnseitigen Auslaßstutzen gebildet werden.

Um besonders vorteilhafte Abscheidebedingungen sicherzustellen, empfiehlt es sich, eine sich von der Decke zum Boden konisch erweiternde Abscheidewand vorzusehen, bei der eine vergleichsweise große Strömungskomponente entlang der Lamellen auftritt, was die Verringerung der Strömungsgeschwindigkeit im Bereich der Abscheidewand unterstützt.

Um eine vorteilhafte Strömungsführung innerhalb der Abscheidewand zu ermöglichen, kann der Ansaugstutzen gegen das Radialgebläse hin in das Gehäuse vorstehen, so daß die über den Ansaugstutzen angesaugte Abluft nicht die Strömung der durch das Radialgebläse beschleunigten Abluft über eine Kurzschlußströmung beeinträchtigen kann.

Aufgrund der guten Abscheidewirkung von Flüssigkeitsnebeln und der Unempfindlichkeit gegenüber einer Staubbelastung der Abluft eignet sich die erfindungsgemäße Vorrichtung auch zur Staubabscheidung, wenn der Ansaugstutzen mit einer Sprüheinrichtung versehen wird, mit deren Hilfe die Staubteilchen benetzt werden, so daß sie mit den sich um die Staubteilchen bildenden Nebeltröpfchen aus der Abluft durch Fliehkraftwirkung abgeschieden werden können. In diesem Fall wird bevorzugt Wasser in den Ansaugstutzen eingesprüht.

Die Ausbildung der Abscheidewand kann unterschiedlich ausfallen, weil es lediglich darum geht, durch gegeneinander versetzte und einander überlappende Lamellen einen mehrmals umgelenkten Strömungsweg durch die Abscheidewand zu erzwingen. Besonders einfache Konstruktionsverhältnisse ergeben sich allerdings, wenn die Lamellen der Abscheidewand aus einem im Querschnitt im wesentlichen U-förmigen Profil bestehen, und in zwei einander gegenüberliegenden Reihen angeordnet sind, wobei jeweils die einander zugekehrten Schenkel zweier benachbarter Lamellen einer Reihe mit Abstand zwischen die beiden Schenkel der jeweils gegenüberliegenden Lamelle der anderen Reihe greifen. Der im wesentlichen U-förmige Querschnitt der Lamellenprofile bringt nicht nur eine entsprechende Aussteifung der Lamellen mit sich, sondern bedingt auch bei der geschilderten Anordnung ein mehrmaliges Umlenken der Abluftströmung zwischen den Lamellen, so daß trotz der Anordnung von nur zwei Lamellenreihen eine vorteilhafte Nebelabscheidung gewährleistet werden kann.

In der Zeichnung ist der Erfindungsgegenstand beispielsweise dargestellt. Es zeigen:
- Fig. 1: eine erfindungsgemäße Vorrichtung zum Abscheiden eines Flüssigkeitsnebels in einer zum Teil aufgerissenen Draufsicht,
- Fig. 2: diese Vorrichtung in einem Schnitt nach der Linie II-II der Fig. 1 und
- Fig. 3: einen Querschnitt durch die Abscheidewand gemäß der Linie III-III der Fig. 2 in einem größeren Maßstab.

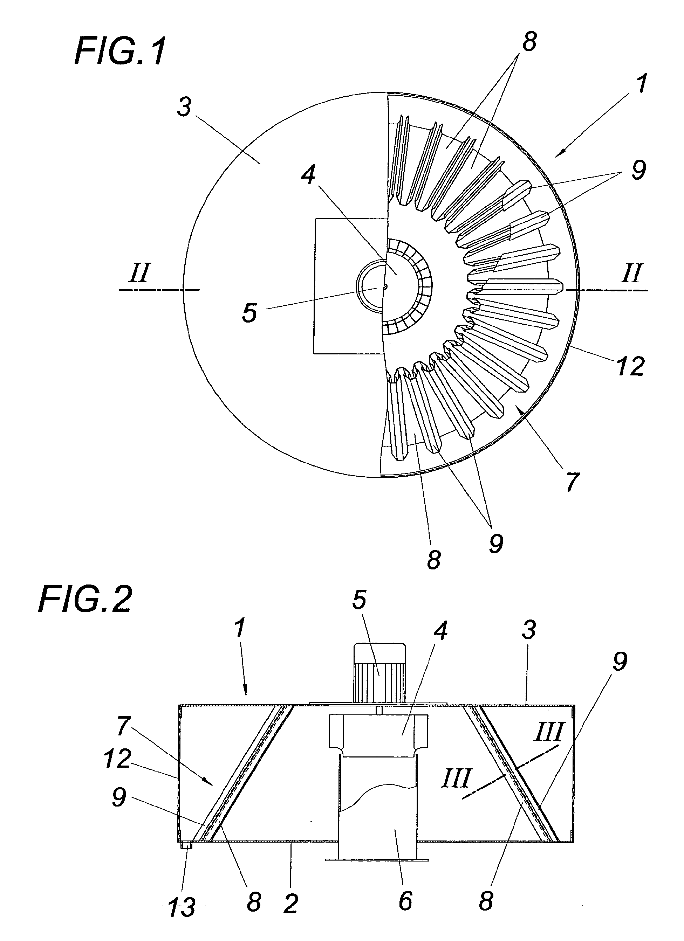

Die Vorrichtung zum Abscheiden eines Flüssigkeitsnebels, beispielsweise eines Ölnebels, aus einer Abluft besteht gemäß dem dargestellten Ausführungsbeispiel aus einem zylindrischen Gehäuse 1, dessen Boden mit 2 und dessen Decke mit 3 bezeichnet werden. In der Decke 3 ist ein Radialgebläse 4 gelagert, das durch einen Motor 5 angetrieben wird. In den Boden 2 ist koaxial zum Radialgebläse 4 ein Ansaugstutzen 6 eingesetzt, der in das Gehäuse 1 gegen das Radialgebläse 4 vorsteht, wie dies der Fig. 2 entnommen werden kann. Das Radialgebläse 4 und der Ansaugstutzen 6 werden mit radialem Abstand von einer Abscheidewand 7 umschlossen, die sich zwischen dem Boden 2 und der Decke 3 erstreckt und einen durch das Radialgebläse 4 bestimmten Zentrifugenbereich vom übrigen Gehäuse 1 abgrenzt. Die Abscheidewand 7 erweitert sich von der Decke 3 zum Boden 2 konisch und wird durch Lamellen 8 und 9 gebildet, die in zwei Reihen angeordnet sind und einander reihenweise überdecken.

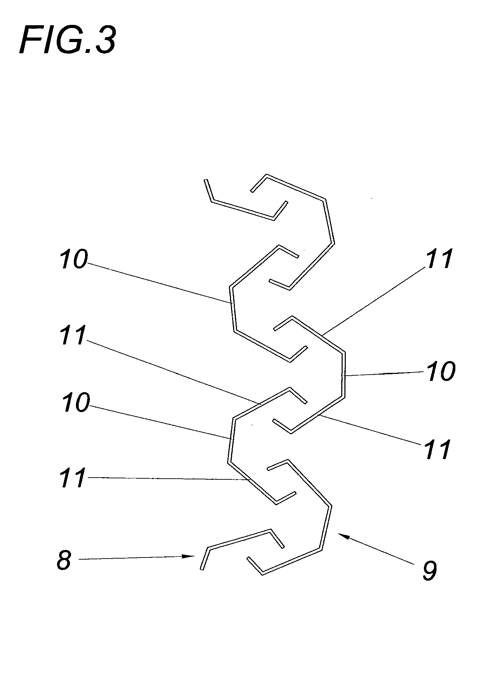

Gemäß der Fig. 3 bestehen die Lamellen 8 und 9 aus im Querschnitt im wesentlichen U-förmigen Profilen, deren durch einen Steg 10 miteinander verbundene Schenkel mit 11 bezeichnet sind. Um die konische Erweiterung der Abscheidewand 7 zu erreichen, weisen die Lamellen 8 einer Lamellenreihe einen sich entsprechend von der Decke 3 zum Boden 2 hin verbreiternden Steg 10 auf. Die Anordnung ist dabei so getroffen, daß die einander zugekehrten Schenkel 11 zweier benachbarter Lamellen 8 der einen Lamellenreihe jeweils zwischen die Schenkel 11 einer gegenüberliegenden Lamelle 9 der anderen Lamellenreihe greifen, so daß die Abluft beim Durchströmen der Abscheidewand 7 mehrmals umgelenkt wird, wie dies aus der Fig. 3 unmittelbar erkennbar wird. Dieses mehrmalige Umlenken der Abluftströmung im Bereich der ruhenden Abscheidewand 7 bewirkt mit Unterstützung durch den konischen Wandverlauf, daß zwar mit der Abluft über das Radialgebläse 4 angesaugte Nebeltröpfchen unter einer erheblichen Fliehkraftwirkung gegen die Abscheidewand 7 geschleudert werden, daß aber die Strömungsgeschwindigkeit der Abluft beim Durchtritt durch die Abscheidewand 7 so verringert wird, daß ein Mitreißen von abgeschiedenen Nebeltröpfchen durch die an den Lamellen 8, 9 vorbeistreichende Abluft ausgeschlossen werden kann. Außerhalb der Abscheidewand 7 können daher von der Abluft keine Nebeltröpfchen mehr aufgenommen werden, was die gute Abscheidewirkung der Vorrichtung bedingt. Die gereinigte Abluft wird über einen Abluftauslaß 12 außerhalb der Abscheidewand 7 ins freie geblasen. Der Abluftauslaß 12 wird im Fall des Ausführungsbeispieles durch eine gelochte Umfangswand des Gehäuses gebildet

Der Boden 2 dient als Sammelwanne für die abgeschiedenen Flüssigkeitströpfchen, die sich an den Lamellen 8 und 9 anlagern und entlang dieser Lamellen gegen den Boden 2 abfließen. Über einen Flüssigkeitsablaß 13 im Boden 2 kann der sich bildende Flüssigkeitssumpf aus dem Gehäuse 1 entnommen werden.

## Patentansprüche

1. Vorrichtung zum Abscheiden eines Flüssigkeitsnebels aus einer Abluft mit einem eine vertikale Drehachse aufweisenden Radialgebläse (4) und mit einem das Radialgebläse (4) aufnehmenden, einen Sammelraum für die abgeschiedene Flüssigkeit bildenden Gehäuse (1), das neben einem Abluftauslaß (12) einen zum Radialgebläse (4) koaxialen Ansaugstutzen (6) im Boden (2) aufweist, **dadurch gekennzeichnet, daß** im Gehäuse (1) eine das Radialgebläse (4) und den Ansaugstutzen (6) mit radialem Abstand umschließende, den Boden (2) und die Decke (3) des Gehäuses (1) verbindende Abscheidewand (7) vorgesehen ist, die aus wenigstens zwei Reihen von einander reihenweise überlappenden Lamellen (8, 9) besteht, und daß der Abluftauslaß (12) außerhalb der Abscheidewand (7) angeordnet ist.

2. Vorrichtung nach Anspruch 1, **dadurch gekennzeichnet, daß** sich die Abscheidewand (7) von der Decke (3) zum Boden (2) konisch erweitert.

3. Vorrichtung nach Anspruch 1 oder 2, **dadurch gekennzeichnet, daß** der Ansaugstutzen (6) gegen das Radialgebläse (4) in das Gehäuse (1) vorsteht.

4. Vorrichtung nach einem der Ansprüche 1 bis 3, **dadurch gekennzeichnet, daß** der Ansaugstutzen (6) mit einer Sprüheinrichtung versehen ist.

5. Vorrichtung nach einem der Ansprüche 1 bis 4, **dadurch gekennzeichnet, daß** die Lamellen (8, 9) der Abscheidewand (7) aus einem im Querschnitt im wesentlichen U-förmigen Profil bestehen und in zwei einander gegenüberliegenden Reihen angeordnet sind, wobei jeweils die einander zugekehrten Schenkel (11) zweier benachbarter Lamellen (8, 9) einer Reihe mit Abstand zwischen die beiden Schenkel (11) der jeweils gegenüberliegenden Lamelle (8 bzw. 9) der anderen Reihe greifen.
